(19) Europäisches Patentamt / European Patent Office / Office européen des brevets

(11) **EP 3 752 415 B1**

(12) **FASCICULE DE BREVET EUROPEEN**

(45) Date de publication et mention
de la délivrance du brevet:
**19.01.2022 Bulletin 2022/03**

(21) Numéro de dépôt: **19705325.9**

(22) Date de dépôt: **12.02.2019**

(51) Classification Internationale des Brevets (IPC):
**B62M 6/55** *(2010.01)* **B62M 11/14** *(2006.01)*

(52) Classification Coopérative des Brevets (CPC):
**B62M 6/55; B62M 11/145**

(86) Numéro de dépôt international:
**PCT/EP2019/053386**

(87) Numéro de publication internationale:
**WO 2019/158503 (22.08.2019 Gazette 2019/34)**

(54) **GROUPE MOTOPROPULSEUR**

ANTRIEBSSTRANG

POWER TRAIN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2018 BE 201805095**

(43) Date de publication de la demande:
**23.12.2020 Bulletin 2020/52**

(73) Titulaire: **E2 Drives SA
1332 Genval (BE)**

(72) Inventeur: **DELEVAL, Arthur
3090 Overijse (BE)**

(74) Mandataire: **Gevers Patents
Intellectual Property House
Holidaystraat 5
1831 Diegem (BE)**

(56) Documents cités:
**EP-A1- 3 188 957        DE-A1-102010 062 534
DE-A1-102017 201 325**

## Description

## Domaine technique

La présente invention concerne un groupe motopropulseur pour véhicule à pédales, en particulier pour vélo ou vélo électrique.

## Art antérieur

Le document WO2016/034574, qui montre toutes les caractéristiques du préambule de la revendication indépendante 1, décrit un groupe motopropulseur pour vélo comprenant un train épicycloïdal, un axe de pédalier, un plateau de sortie, un premier moteur et un deuxième moteur. Le train épicycloïdal comprend une couronne, un planétaire et un porte-satellite.

Dans ce groupe motopropulseur, le porte-satellite comprend des doubles satellites, ce qui est complexe à fabriquer, à monter et onéreux.

## Résumé de l'invention

Un des buts de l'invention est de fournir un groupe motopropulseur pour véhicule à pédales simple de fabrication, léger, robuste, de faible encombrement et de rendement particulièrement grand.

A cet effet, l'invention propose, un groupe motopropulseur pour un véhicule à pédales et comprenant:

- un axe de pédalier agencé de façon à tourner autour d'un premier axe de rotation,
- un plateau de sortie principal agencé pour entrainer une chaine ou courroie de transmission de sortie,
- un premier moteur,
- un deuxième moteur,
- un train épicycloïdal comprenant un premier élément d'entrée, un élément de sortie et un planétaire,

  l'axe de pédalier et le deuxième moteur étant reliés au train épicycloïdal via le premier élément d'entrée de façon à former une première entrée du train épicycloïdal,
  le premier moteur étant relié au train épicycloïdal via le planétaire de façon à former une deuxième entrée du train épicycloïdal,
  l'élément de sortie reliant le train épicycloïdal au plateau de sortie principal de façon à former une sortie du train épicycloïdal, caractérisé en ce que

- le plateau de sortie principal, le premier élément d'entrée, l'élément de sortie et le planétaire sont agencés de façon à tourner autour d'un même deuxième axe de rotation différent du premier axe de rotation,
- le plateau de sortie principal est solidaire de l'élément de sortie, et
- le groupe motopropulseur comprend :

- un plateau de sortie secondaire agencé pour tourner autour du premier axe de rotation et engrené sur la chaine ou courroie de transmission de sortie,
- une première roue libre agencée pour empêcher le plateau de sortie secondaire de tourner moins vite que l'axe de pédalier lorsque l'axe de pédalier tourne dans le sens normal de pédalage,
- un système de démultiplication de vitesse conservant le sens de rotation pour transmettre une rotation entre l'axe de pédalier et le premier élément d'entrée.

Dans le groupe motopropulseur selon l'invention, le plateau de sortie principal, le premier élément d'entrée, l'élément de sortie et le planétaire ont un axe de rotation décalé spatialement de l'axe de rotation de l'axe du pédalier. Cela permet que la taille du planétaire soit indépendante du diamètre de l'axe du pédalier. Cela permet alors d'installer un planétaire de plus petit diamètre et donc d'augmenter la raison du train épicycloïdal. Il est donc possible d'obtenir une raison suffisante pour le train épicycloïdal sans utiliser de satellites doubles. Cela permet que le groupe motopropulseur soit plus facile à fabriquer, à monter et revienne moins cher.

Le groupe motopropulseur selon l'invention permet aussi d'obtenir un grand rapport de réduction entre le premier moteur et le plateau de sortie. En effet, ce rapport de réduction dépend de la raison du train épicycloïdal, du rapport de démultiplication entre l'axe de pédalier et la première entrée du train épicycloïdal ainsi que du rapport du nombre de dents entre le plateau de sortie secondaire et principal.

La solidarisation du plateau de sortie principal avec l'élément de sortie permet que la sortie du train épicycloïdal entraine le plateau de sortie principal sans réduction de vitesse. Cela permet un assemblage particulièrement aisé du groupe motopropulseur, et le rend particulièrement léger et peu volumineux. De plus, cela permet d'obtenir un rendement particulièrement grand.

Le plateau de sortie secondaire, tournant autour d'un autre axe que le plateau de sortie principal, permet de guider la chaine ou courroie de transmission de sortie autour de l'axe du pédalier afin d'écarter le brin inférieure et le brin supérieure de la chaine. Ainsi, il y a suffisamment de place entre les brins de la chaine ou courroie de transmission vers la roue arrière pour le passage de la base arrière du cadre du véhicule. Cette base arrière est le tube du cadre reliant le point de fixation de la roue arrière à la patte de fixation du moteur central. De préférence, le plateau de sortie secondaire est situé à l'extérieur d'un carter du groupe motopropulseur.

Comme l'axe du pédalier est différent de l'axe du premier élément d'entrée, il y a une première démultiplication entre le pédalier et le premier élément d'entrée. Cela permet de réduire le couple dans le train épicycloïdal tout en augmentant sa vitesse de rotation. Par conséquent, les exigences de robustesse du train épicycloïdal sont diminuées et un train épicycloïdal plus léger est possible. En outre, la rotation plus rapide des éléments du train épicycloïdal permet qu'il soit compatible avec des moteurs de plus petite taille, qui typiquement tourne plus vite et avec moins de couple que des moteurs plus grands.

La première roue libre est agencée pour permettre une transmission de puissance mécanique depuis l'axe de pédalier vers le plateau de sortie secondaire. La première roue libre est disposée, préférentiellement directement, entre l'axe de pédalier et le plateau de sortie secondaire. En position bloquée, l'axe de pédalier entraine directement le plateau de sortie secondaire. En position libre, le plateau de sortie secondaire peut tourner plus vite que l'axe de pédalier. Cette position de la roue libre permet d'atteindre un premier rapport de vitesse du groupe motopropulseur particulièrement faible.

En outre, la première roue libre permet que, sous certaines conditions, l'axe de pédalier entraine directement le plateau de sortie secondaire, qui lui-même entraine la chaine ou courroie de transmission de sortie qui entraine la roue arrière. Toute la puissance du pédalage est alors directement transmise à la chaine de transmission ou courroie de sortie via le plateau de sortie secondaire. Le reste du système de transmission, dont le train épicycloïdal, n'est donc pas chargé, ce qui permet un haut rendement mécanique. Cela se produit par exemple si le système électrique du groupe motopropulseur est mis hors tension ou si l'assistance est désactivée et que le plus petit rapport de vitesse du groupe motopropulseur est sélectionné.

Le plateau de sortie secondaire peut également transmettre une partie de la puissance si le couple instantané sur le pédalier dépasse un certain seuil et que le premier moteur sature à son couple maximal. Pendant la durée de cette poussée sur la pédale, la valeur instantanée du rapport de vitesse du groupe motopropulseur diminue, et par exemple si le rapport de vitesse programmé est faible, il se peut que la première roue libre se mette en action et entraine le plateau de sortie secondaire qui transmet alors le couple excédentaire du cycliste à la chaine ou courroie de transmission de sortie. Lorsque cela se produit, ce qui peut arriver lorsque l'assistance est activée, la chaine ou courroie de transmission de sortie reçoit de la puissance d'une part via le train épicycloïdal et le plateau de sortie principal et d'autre part via le plateau de sortie secondaire. La présence du plateau de sortie secondaire et de la première roue libre empêche ainsi le rapport de vitesse du groupe motopropulseur d'être inférieure à un.

Il est intéressant de noter que le groupe motopropulseur a un mode de fonctionnement, qui peut être appelé « mode de fonctionnement normal », dans lequel l'entièreté de la puissance, ce qui équivaut à la somme des puissances des deux moteurs et de la puissance du cycliste est fournie au plateau de sortie principal. Ce plateau de sortie principal transmet la puissance via la chaine ou courroie de transmission de sortie à la roue arrière.

Ce mode de fonctionnement est celui le plus souvent utilisé par les cyclistes utilisant un vélo électrique.

Dans le groupe motopropulseur selon l'invention, une transmission par un système de démultiplication de vitesse conservant le sens de rotation existe entre l'axe de pédalier et la première entrée du train épicycloïdal. Ce système de démultiplication de vitesse permet une démultiplication de la vitesse angulaire, ce qui est particulièrement intéressant car la vitesse du pédalier qui est beaucoup plus faible que celle d'un moteur électrique.

Dans le cadre du présent document, le sens normal de pédalage est le sens de rotation de l'axe du pédalier qui correspond à un mouvement vers l'avant du véhicule à pédales. Au cause des couplages dans le groupe motopropulseur, les éléments du groupe motopropulseur ont de préférence chacun un sens de rotation qui correspond à ce sens normal de pédalage.

Les différentes caractéristiques du groupe motopropulseur selon l'invention permettent que les éléments de celui-ci aient des rapports de rapports de réduction/démultiplication mécanique particulièrement grands tout en gardant un nombre d'étages de transmission relativement petits. Ainsi, le groupe motopropulseur fournit un excellent rendement tout en gardant une taille et un poids faibles.

Un faible nombre d'étages de transmission permet d'optimiser le rendement de transmission. En outre, cela permet de diminuer le jeu de transmission entre les éléments du groupe motopropulseur, ce qui peut améliorer la précision du contrôle du groupe motopropulseur. Cette précision de contrôle est notamment particulièrement utile si le premier moteur est contrôlé en vitesse sur base de la vitesse du deuxième moteur.

Un avantage du groupe motopropulseur est qu'il permet de placer une démultiplication entre l'axe du pédalier et le premier élément d'entrée du train épicycloïdal. Tous les éléments du train épicycloïdal tournent donc plus vite et avec moins de couple. Cela diminue les contraintes mécaniques qu'ils subissent.

Un autre avantage du groupe motopropulseur selon l'invention est qu'il fournit un rapport de transmission variable de façon continue.

Préférentiellement, le plateau de sortie principal et le plateau de sortie secondaires sont engrenés directement ou indirectement sur la chaine ou courroie de transmission qui entraine la roue arrière du véhicule à pédale. Tout autre mécanisme permettant d'entrainer la chaine ou courroie de transmission de sortie est néanmoins possible tout en restant dans le cadre de l'invention.

Préférentiellement, le groupe motopropulseur comprend une unité de contrôle permettant de contrôler le premier et le deuxième moteurs.

Le fait que l'axe du pédalier et le plateau de sortie secondaire aient le même axe de rotation permet que l'axe de pédalier ne soit pas dans le chemin de la chaine ou courroie de transmission de sortie qui permet de relier le plateau de sortie principal à la roue arrière.

Préférentiellement, le premier axe de rotation et le deuxième axe de rotation sont parallèles. Préférentiellement, l'axe de rotation du deuxième moteur leur est aussi parallèle.

Dans le cadre du présent document, deux éléments connectés ou reliés peuvent être connectés ou reliés directement ou indirectement. Ils peuvent, par exemple, être engrenés directement ou indirectement via au moins une roue dentée intermédiaire, une courroie et/ou un galet.

Dans le cadre du présent document, les termes « entrée » et « sortie » doivent être compris dans le sens d'une entrée et d'une sortie dans une chaine cinématique. Une entrée est préférentiellement une entrée en puissance mécanique et une sortie est préférentiellement une sortie en puissance mécanique.

Dans le cadre du présent document, la raison du train épicycloïdal est le rapport de réduction du train épicycloïdal. Dans le cas d'un train épicycloïdal avec des satellites simples, c'est le rapport entre le diamètre de la couronne et le diamètre du planétaire. La raison du train épicycloïdal est ici de préférence comprise entre cinq et dix.

Dans le cadre du présent document, un véhicule à pédales peut par exemple être un vélo, un vélomoteur, un tricycle.

Dans le cadre du présent document, « le rapport de vitesse du groupe motopropulseur » est définit comme étant le rapport entre la vitesse du plateau de sortie secondaire et la vitesse de l'axe du pédalier. Il peut aussi être appelé « paramètre de rapport de vitesses ». C'est un paramètre qui peut être commandé manuellement par le cycliste via une interface de contrôle ou calculé automatiquement par l'unité de contrôle en fonction d'autres paramètres.

Dans le cadre du présent document, un élément "agencé de façon à tourner autour d'un axe de rotation" est préférentiellement un élément essentiellement symétrique autour de cet axe.

Dans le cadre du présent document, un "rapport fixe" entre deux objets signifie que leurs vitesses de rotation sont dans un rapport constant.

Dans le cadre du présent document, le « niveau d'assistance du groupe motopropulseur » désigne la portion de puissance donnée par l'assistance électrique par rapport à la puissance donnée par le cycliste. Il peut être calculé comme étant la puissance de l'ensemble des deux moteurs divisée par la somme de la puissance de l'ensemble des deux moteurs et de la puissance du cycliste. Il peut aussi être appelé « paramètre de niveau d'assistance ». C'est un paramètre qui peut être commandé manuellement par le cycliste via une interface de contrôle ou calculé automatiquement par l'unité de contrôle en fonction d'autres paramètres.

Dans le cadre du présent document, une mesure de position angulaire est équivalente à une mesure de vitesse angulaire. En effet, le groupe motopropulseur selon l'invention comprend préférentiellement un moyen pour déterminer la vitesse angulaire d'un des moteurs à partir de la position angulaire de ce moteur.

Dans le cadre du présent document, une mesure de courant est équivalente à une mesure de couple. En effet, le groupe motopropulseur selon l'invention comprend préférentiellement un moyen pour déterminer le couple d'un des moteurs à partir du courant fourni à ce moteur.

Le train épicycloïdal comprend une couronne, un porte-satellite et un planétaire. Le porte-satellite comprend des satellites. Le planétaire peut également être appelé planétaire intérieur ou soleil. La couronne peut également être appelée planétaire extérieur. Le planétaire et la couronne sont préférentiellement reliés via les satellites.

Préférentiellement, le porte-satellite ne comprend que des satellites simples. En effet, le groupe motopropulseur selon l'invention permet d'éviter l'usage de doubles satellites.

Préférentiellement, le groupe motopropulseur comprend une ou plusieurs batteries.

Préférentiellement, le plateau de sortie principal est fixé à un arbre creux disposé autour de l'axe du premier moteur et coaxial au train épicycloïdal.

Préférentiellement, le plateau de sortie secondaire est fixé à un arbre creux disposé autour de l'axe de pédalier et coaxial à l'axe du pédalier.

Le plateau de sortie principal pourrait être appelé « premier plateau de sortie» et le plateau de sortie secondaire pourrait être appelé « deuxième plateau de sortie».

La transmission entre l'axe du pédalier et le premier élément d'entrée se fait via un mécanisme de transmission tel que le premier élément d'entrée tourne dans le même sens que l'axe de pédalier.

Préférentiellement, le plateau de sortie principal et le plateau de sortie secondaire sont reliés à la roue arrière du véhicule à pédales par l'intermédiaire d'une chaine de transmission de sortie ou d'une courroie de transmission de sortie.

La rotation de l'axe du pédalier provient du mouvement de pédalage d'un cycliste utilisant le véhicule à pédales. L'utilisation d'un train épicycloïdal prenant en entrée l'axe du pédalier permet un changement du rapport de vitesse entre la rotation de l'axe de pédalier et la rotation du plateau de sortie principal, ainsi que la rotation du plateau de sortie secondaire.

Préférentiellement, le contrôle des moteurs est un contrôle avec retour d'information, aussi appelé contrôle en boucle fermée (feed back control en anglais).

Le groupe motopropulseur selon l'invention peut fonctionner en frein à rétropédalage, ce qui permet de récupérer l'énergie de freinage pour recharger la batterie. Préférentiellement, le groupe motopropulseur est alors agencé de façon à ce que la roue arrière soit capable d'entrainer la chaine pour transmettre le mouvement sur le plateau de sortie principal. Cela peut par exemple se faire en installant le pignon de la roue arrière de manière fixe sur un moyeu de la roue arrière. Par conséquent, si le véhicule à pédale descend une pente, la chaine tourne en entrainant le plateau de sortie principal. Cela aura pour conséquence de faire tourner le premier moteur et/ou le pédalier dans un sens qui correspond au sens de pédalage normal . Si le cycliste désire freiner, il peut actionner le pédalier en arrière, c'est-à-dire dans le sens inverse au sens au sens de pédalage normal. La position du pédalier peut être déterminée par l'élément de mesure d'une position angulaire du deuxième moteur, par exemple grâce au deuxième capteur. Préférentiellement, le deuxième moteur n'est alors pas contrôlé par l'unité de contrôle. Préférentiellement, le premier moteur est contrôlé en couple ou en courant, avec une consigne de couple négative qui correspond au fait que le moteur agisse en générateur. Cette consigne de couple négative est préférentiellement proportionnelle à un angle négatif effectué par le pédalier. La mesure de cette angle est mise à zéro au moment où le cycliste actionne le pédalier en arrière. Ainsi, au moment où le cycliste actionne le pédalier en arrière, le premier moteur commence à freiner le vélo. Le cycliste sent donc un couple proportionnel au couple de freinage du premier moteur, tendant à faire revenir le pédalier en avant. Il s'agit donc d'un système stable. Plus le cycliste pousse en arrière, plus le premier moteur freine. Si le cycliste relâche la pression vers l'arrière du pédalier, le pédalier revient en avant et le premier moteur cesse de freiner le vélo. Si le plateau de sortie principal est relié au porte-satellite, ce dernier agit comme un différentiel. Il a donc tendance à faire tourner le premier moteur dans un sens qui correspond au sens normal de pédalage. Le premier moteur est à ce moment contrôlé comme un générateur pour freiner le vélo et transmettre ainsi de la puissance vers la batterie. Ce système peut par exemple être activé par un rétropédalage, comme le système torpédo. La puissance du frein et donc la quantité d'énergie fournie à la batterie peut être contrôlée en fonction de la force de rétropédalage que le cycliste exerce.

Dans un premier mode de réalisation de l'invention, le premier élément d'entrée est une couronne du train épicycloïdal et l'élément de sortie est un porte-satellite du train épicycloïdal.

Selon un exemple préféré de ce mode de réalisation, l'axe du pédalier est relié, avec un rapport fixe, à la couronne; le rotor du deuxième moteur est relié, avec un rapport fixe, à la couronne; le rotor du premier moteur est relié, avec un rapport fixe, au planétaire; la couronne forme la première entrée du train épicycloïdal et le planétaire forme la deuxième entrée du train épicycloïdal; le porte-satellite forme une sortie du train épicycloïdal; le porte-satellite est solidaire du plateau de sortie principal. Plus préférentiellement, le rotor du premier moteur est solidaire du planétaire.

Dans un deuxième mode de réalisation de l'invention, le premier élément d'entrée est un porte-satellite du train épicycloïdal et l'élément de sortie est une couronne du train épicycloïdal.

Selon un exemple préféré de ce mode de réalisation, l'axe de pédalier est relié, avec un rapport fixe, au porte-satellite; le rotor du deuxième moteur est relié, avec un rapport fixe, au porte-satellite; le rotor du premier moteur est relié, avec un rapport fixe, au planétaire; le porte-satellite et le planétaire forment deux entrées du train épicycloïdal; la couronne forme une sortie du train épicycloïdal, la couronne est reliée, de avec un rapport fixe, au plateau de sortie principal. Plus préférentiellement, le rotor du premier moteur est solidaire du planétaire.

Dans un mode de réalisation de l'invention, le système de démultiplication de vitesse conservant le sens de rotation comprend un élément de transmission déformable, par exemple une chaine ou une courroie.

Dans le cadre du présent document, un élément de transmission déformable peut être par exemple une bande flexible. Cela peut être une courroie, préférentiellement faite dans un matériau souple et préférentiellement dentée ou crantée sur sa surface intérieure. Cela peut être aussi une chaine.

L'utilisation d'un élément de transmission déformable permet aussi de diminuer les marges de tolérance, c'est-à-dire le jeu, dans la transmission par rapport à l'utilisation d'engrenages.

De préférence, le système de démultiplication de vitesse conservant le sens de rotation est un élément de transmission déformable, un double étage d'engrenage ou un engrenage où l'une des roues dentées a une denture interne car, dans chacun de ces système de transmission, le sens de rotation d'entrée est identique au sens de rotation de sortie.

La transmission par élément de transmission déformable, contrairement à la transmission par engrenage, laisse le choix de l'entraxe entre les éléments en rotation à ses deux extrémités. Cela donne beaucoup de liberté de conception. Cela permet aussi d'obtenir un grand rapport de démultiplication entre l'axe de pédalier et la première entrée du train épicycloïdal sans augmenter la taille du système. Ce grand rapport de démultiplication permet de choisir un axe de pédalier de diamètre relativement faible, ce qui diminue le poids du groupe motopropulseur. Il permet également de réduire la taille des moteurs électriques. Cela permet donc d'augmenter le rapport de démultiplication entre l'axe du pédalier et le premier élément d'entrée sans augmenter la taille du groupe motopropulseur.

En outre, l'utilisation d'un élément de transmission déformable pour démultiplier la vitesse de l'axe du pédalier jusqu'à la première entrée du train épicycloïdal permet d'obtenir un écart particulièrement grande entre l'axe de pédalier et l'axe du train épicycloïdal. Il est ainsi possible d'augmenter la taille de la couronne du train épicycloïdal pour en augmenter sa raison. Le but d'augmenter la raison du train épicycloïdal et d'augmenter la vitesse des deux moteurs électriques et d'ainsi diminuer la taille de ces moteurs. Cela réduit le poids et le volume du groupe motopropulseur. De cette manière, il est possible de réduire le diamètre des deux moteurs électriques, ce qui permet de les positionner tous les deux du même côté du groupe motopropulseur.

L'élément de transmission déformable permet d'isoler le pédalier des vibrations pouvant venir des moteurs électriques ou de la transmission. Elle amortit ainsi les vibrations ressenties par le cycliste dans les pieds, améliorant ainsi son confort.

Dans un mode de réalisation de l'invention, le deuxième moteur est relié au premier élément d'entrée du train épicycloïdal par un mécanisme de réduction à un seul étage. Par exemple, le rotor du deuxième moteur peut être engrené directement sur le premier élément d'entrée. Cela permet de limiter les pertes et le jeu d'engrenage.

Dans un mode de réalisation de l'invention, le premier moteur est solidaire du planétaire.

Dans un mode de réalisation de l'invention, le premier moteur et le deuxième moteur sont situés d'un même côté du train épicycloïdal. Cette conception permet de diminuer le volume du groupe motopropulseur et de faciliter l'assemblage car les deux moteur sont ainsi proches d'une même carte électronique à laquelle ils peuvent être tous les deux connectés. Préférentiellement, les moteurs sont situés du côté du groupe motopropulseur opposé à celui des plateaux de sortie.

Dans un mode de réalisation de l'invention, le groupe motopropulseur comprend en outre :

- un élément de mesure de position angulaire du premier moteur,
- un élément de mesure de position angulaire du deuxième moteur,
- un élément de mesure de courant du premier moteur,
- un élément de mesure de courant du deuxième moteur,
- une unité de contrôle connectée au premier moteur, au deuxième moteur, et agencée pour contrôler le premier moteur et le deuxième moteur sur base de la position angulaire du premier moteur, de la position angulaire du deuxième moteur, du courant du premier moteur et du courant du deuxième moteur, l'unité de contrôle étant agencée pour contrôler le deuxième moteur selon un contrôle en courant ou en couple et pour contrôler le premier moteur selon un contrôle en position angulaire ou en vitesse angulaire.

Dans un mode de réalisation de l'invention, le premier moteur a pour rôle de gérer le rapport de vitesse du groupe motopropulseur. Une de ses fonctions est d'offrir un rapport de transmission donné. Ce rapport de transmission est le rapport entre la vitesse angulaire de l'axe du pédalier et la vitesse angulaire du plateau de sortie secondaire. Ce rapport de transmission peut par exemple être déterminé sur base d'un paramètre de rapport de vitesses fourni par l'utilisateur du véhicule à pédale ou déterminé par l'unité de contrôle afin d'offrir un changement de vitesse automatique au cycliste. Cette détermination peut notamment être réalisée par un algorithme de passage de vitesses. Le premier moteur est préférentiellement contrôlé en position angulaire ou en vitesse angulaire, par exemple via l'unité de contrôle qui contrôle le premier moteur de telle sorte qu'une consigne de position angulaire ou de vitesse angulaire soit respectée.

Dans un mode de réalisation de l'invention, le deuxième moteur a pour rôle de gérer le bon niveau d'assistance du groupe motopropulseur. Une de ses fonctions est d'assister le mouvement du cycliste en ajoutant du couple sur le pédalier. Préférentiellement, le niveau d'assistance est déterminée par l'unité de contrôle sur base notamment d'un paramètre de niveau d'assistance. Le paramètre de niveau d'assistance peut être déterminé par l'utilisateur ou de façon automatique par l'unité de contrôle du groupe motopropulseur. Il est préféré que le niveau d'assistance soit indépendant du rapport de vitesse du groupe motopropulseur. Le deuxième moteur est préférentiellement contrôlé en courant ou en couple, par exemple via l'unité de contrôle qui contrôle le deuxième moteur de telle sorte qu'une consigne de courant ou de couple soit respectée.

Préférentiellement, l'unité de contrôle est connectée électriquement à l'élément de mesure d'une position angulaire du premier moteur, à l'élément de mesure d'une position angulaire du deuxième moteur, à l'élément de mesure d'un courant du premier moteur, et à l'élément de mesure d'un courant du deuxième moteur.

Il est intéressant de noter qu'il n'y a pas de différence fondamentale entre un contrôle en position et un contrôle en vitesse car il existe un lien mathématique direct entre les deux valeurs. La vitesse angulaire est la dérivée temporelle de la position angulaire. Par exemple, contrôler un moteur pour qu'il tourne à une vitesse angulaire constante revient à contrôler un moteur pour qu'il suive une position angulaire évoluant linéairement en fonction du temps.

Le contrôle des premier et deuxième moteurs peut par exemple être réalisé de la façon suivante dans le premier mode de réalisation de l'invention.

La vitesse angulaire de la roue arrière du vélo $\omega_R$ est proportionnelle à la vitesse angulaire du plateau de sortie secondaire $\omega_{plat}$ :

$$\omega_R = R_R . \omega_{plat}$$

Avec $R_R$ le rapport de transmission entre la vitesse angulaire de la roue arrière du vélo et la vitesse angulaire du plateau de sortie secondaire. La vitesse angulaire du plateau de sortie secondaire est donnée par

$$\omega_{plat} = \frac{1}{R_{out}} \left( \frac{\omega_{M1} + R . R_C . \omega_{ped}}{R + 1} \right)$$

Où $R_{out}$ est le rapport du nombre de dents entre le plateau de sortie secondaire et le plateau de sortie principal, $R_C$ est le rapport de démultiplication entre l'axe de pédalier et la couronne, $\omega_{M1}$ est la vitesse angulaire du premier moteur, $\omega_{ped}$ est la vitesse angulaire du pédalier et R est la raison du train épicycloïdal.

La vitesse angulaire du pédalier peut être déterminée à partir de la vitesse angulaire mesurée du deuxième moteur $\omega_{M2}^{mes}$ par

$$\omega_{ped} = \frac{\omega_{M2}^{mes}}{R_{M2}.R_C}$$

Où $R_{M2}$ est le rapport de réduction entre le deuxième moteur et la couronne. $R_{M2}$ est de préférence compris entre 5 et 15.

L'unité de contrôle se base sur un paramètre de rapport de vitesse GC (pour Gear Coefficient en anglais) et sur la vitesse angulaire mesurée du deuxième moteur $\omega_{M2}^{mes}$ pour déterminer la consigne de vitesse angulaire imposée au premier moteur $\omega_{M1}^{cons}$

$$\omega_{M1}^{cons} = GC.\, \omega_{ped}.\, R_C = GC.\frac{\omega_{M2}^{mes}}{R_{M2}}$$

afin que la vitesse angulaire de la roue arrière soit proportionnelle à la vitesse angulaire du pédalier quand le paramètre GC est constant. En combinant les équations, on obtient :

$$\omega_R = \frac{R_R.R_C}{R_{out}}.\left(\frac{GC + R}{R + 1}\right).\,\omega_{ped}$$

$\omega_{M1}^{cons}$ est donc une consigne de vitesse angulaire imposée au premier moteur. De la même manière, il est possible de contrôler le premier moteur en position en lui assignant une consigne de position valant simplement l'intégrale cette consigne de vitesse $\omega_{M1}^{cons}$.

L'équation de couple du train épicycloïdal nous donne cette expression :

$$C_{M1} = \frac{C_{cour}}{R} = \frac{C_{PS}}{(R + 1)}$$

Où $C_{M1}$ est le couple du premier moteur, $C_{cour}$ est le couple de la couronne et $C_{PS}$ est le couple du porte-satellite.

Sachant que le couple du pédalier et le couple du deuxième moteur sont additionnés au niveau de la couronne, on est capable de calculer le couple du pédalier $C_{ped}$ à partir du couple mesuré sur le premier moteur $C_{M1}$ et du couple mesuré sur le deuxième moteur $C_{M2}$.

$$C_{ped} = R_c.(C_{M1}.R - C_{M2}.R_{M2})$$

Il n'est donc pas nécessaire d'utiliser un capteur de couple comme c'est le cas dans la plupart des groupes motopropulseurs pour véhicule à pédales.

On peut considérer un paramètre de niveau d'assistance AF (pour Assistance Factor en anglais), par exemple égale au rapport de la puissance fournie par les moteurs électriques sur la puissance totale fournie au plateau de sortie principal

$$AF = \frac{P_{M1} + P_{M2}}{P_{M1} + P_{M2} + P_{humain}}$$

En prenant en compte que la puissance vaut le couple multipliée par la vitesse angulaire, il est possible de déterminer le couple du deuxième moteur qui est adéquat pour atteindre le paramètre de niveau d'assistance désiré, sur base du couple du premier moteur $C_{M1}$, par l'équation

$$AF = \frac{GC + \dfrac{R_{M2}.C_{M2}}{C_{M1}}}{GC + R}$$

$$=> C_{M2}^{cons} = \frac{C_{M1}^{mes}.(AF(GC + R) - GC)}{R_{M2}}$$

$C_{M2}^{cons}$ est donc une consigne de couple ou de courant imposée au deuxième moteur.

Le contrôle en vitesse du premier moteur, tel que décrit ci-dessus, est fort sensible aux jeux de transmission. En effet, la synchronisation du planétaire avec la première entrée du train épicycloïdal se fait via un certain coefficient multiplicateur proportionnel au rapport de vitesse du groupe motopropulseur. La position angulaire instantanée du planétaire est connue via le capteur de position angulaire du premier moteur. La position angulaire de la première entrée du train épicycloïdal est déduite de la position angulaire lue par le capteur de position angulaire du deuxième moteur. Il est ainsi préférable de limiter le jeu de transmission existant entre le deuxième moteur et la première entrée du train épicycloïdal. Il est donc préféré qu'il n'y ait qu'un seul étage de réduction entre le deuxième moteur et la première entrée du train épicycloïdal afin de réduire le jeu de transmission. De la même manière, la position de la première entrée du train épicycloïdal est influencée par le jeu de transmission existant entre celle-ci et l'axe du pédalier. Il est intéressant de noter que l'utilisation d'un élément de transmission déformable, telle une courroie crantée, réduit aussi fortement le jeu de transmission.

Dans un mode de réalisation de l'invention, l'unité de contrôle est agencée pour déterminer une consigne de courant ou de couple et pour imposer ladite consigne de courant ou de couple au deuxième moteur, la consigne de courant ou de couple étant déterminée comme directement proportionnelle au couple ou courant du premier moteur obtenu par l'élément de mesure du courant du premier moteur et étant fonction du paramètre de rapport de vitesse du groupe motopropulseur (GC) et du paramètre de niveau d'assistance du groupe motopropulseur (AF).

Dans un mode de réalisation de l'invention, l'axe de pédalier et le premier élément d'entrée sont reliés de façon à ce que le premier élément d'entrée tourne plus vite que l'axe de pédalier. Cela permet une démultiplication. Ainsi le train épicycloïdal subit peu de contraintes mécaniques car le couple est plus faible. De plus, cela augmente la vitesse de rotation des éléments du train épicycloïdal, ce qui permet d'utiliser des moteurs électriques tournant plus vite et donc de plus petite taille.

Dans un mode de réalisation de l'invention, le plateau de sortie principal a un diamètre plus petit que le plateau de sortie secondaire. Le plateau de sortie secondaire peut, par exemple, avoir un diamètre entre 1,5 et 3 fois plus grand que le diamètre du plateau de sortie principal.

Dans un mode de réalisation de l'invention, le deuxième moteur est relié au premier élément d'entrée de façon à ce que le premier élément d'entrée tourne plus lentement qu'un rotor du deuxième moteur. Cela permet de diminuer le couple et augmenter la vitesse de rotation du rotor du deuxième moteur et donc de miniaturiser la taille du deuxième moteur.

Dans un mode de réalisation de l'invention, le groupe motopropulseur comprend en outre une carte de circuit imprimé et l'élément de mesure d'une position angulaire du premier moteur comprend un premier capteur, l'élément de mesure d'une position angulaire du deuxième moteur comprend un deuxième capteur, le premier capteur et le deuxième capteur étant préférentiellement disposés sur la carte de circuit imprimé. La carte de circuit imprimé est préférentiellement plane.

Dans un mode de réalisation de l'invention, le groupe motopropulseur comprend en outre une deuxième roue libre agencée pour empêcher un entrainement de l'axe de pédalier par le deuxième moteur dans une direction de rotation correspondant à un mouvement vers l'avant du véhicule à pédales.

L'invention propose en outre un véhicule à pédales comprenant :

- un groupe motopropulseur selon l'un des modes de réalisation de l'invention,
- une roue, et
- une chaine ou courroie de transmission de sortie engrenée sur le plateau de sortie principal, le plateau de sortie secondaire et un pignon de la roue.

Cette roue est préférentiellement une roue arrière du véhicule à pédales. Le véhicule à pédales peut en outre comprendre un galet tendeur engrené sur la chaine ou courroie de transmission de sortie de façon à améliorer la tension dans celle-ci.

## Brève description des figures

D'autres caractéristiques et avantages de l'invention apparaîtront à la lecture de la description détaillée qui suit pour la compréhension de laquelle on se reportera aux figures annexées parmi lesquelles :

- la figure 1 illustre une coupe schématique d'une première variante du premier mode de réalisation de l'invention ;
- la figure 2 illustre une coupe schématique d'une deuxième variante du premier mode de réalisation de l'invention ;
- la figure 3 illustre très schématiquement une chaine cinématique interne d'un groupe motopropulseur selon un mode de réalisation de l'invention ; et
- la figure 4 illustre une vue latérale du groupe motopropulseur selon un mode de réalisation de l'invention et de la transmission vers une roue arrière du véhicule à pédale.

## Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

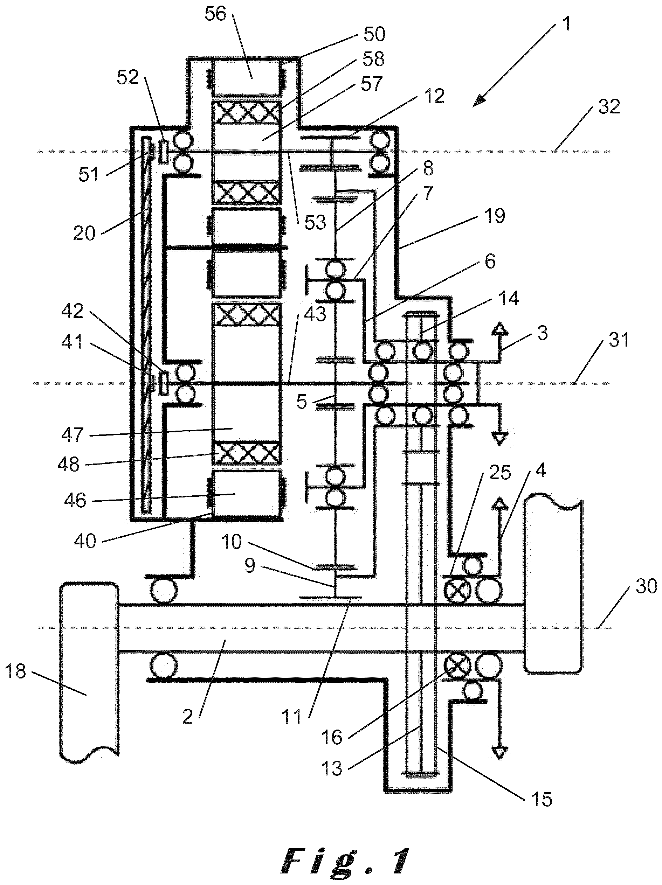

La figure 1 illustre une coupe schématique d'une première variante du premier mode de réalisation de l'invention.

Le groupe motopropulseur 1 comprend un axe de pédalier 2 et un plateau de sortie secondaire 4 de même axe de rotation. Cet axe peut être appelé premier axe de rotation 30. Préférentiellement, l'axe de pédalier 2 est fixé à deux manivelles 18. Préférentiellement, le groupe motopropulseur 1 comprend un carter 19.

Le groupe motopropulseur 1 comprend un plateau de sortie principal 3 fixé au porte-satellite 6, préférentiellement à une extrémité du porte-satellite 6, de façon à tourner avec le porte-satellite 6.

Le groupe motopropulseur 1 comprend également un plateau de sortie secondaire 4, fixé sur un arbre creux de sortie secondaire 25 traversant la paroi latérale du carter 19. L'arbre creux de sortie secondaire 25 est monté sur roulement autour de l'axe de pédalier 2. Une première roue libre 16 est installée entre l'axe de pédalier 2 et l'arbre creux de sortie secondaire 25 de manière à ce que le plateau de sortie secondaire 4 ne puisse pas tourner moins vite que l'axe de pédalier 2 lorsque l'axe de pédalier 2 est actionné dans le sens normal de pédalage.

Le groupe motopropulseur 1 comprend un premier moteur 40 et un deuxième moteur 50. Le premier moteur 40 comprend un stator 46 et un rotor 47 qui comprend préférentiellement des aimants 48. Le rotor 47 est agencé pour tourner autour d'un deuxième axe de rotation 31. Le couple du rotor 47 est transmis par l'axe du rotor 43 à un planétaire 5. Le deuxième moteur 50 comprend un stator 56 et un rotor 57 qui comprend préférentiellement des aimants 58. Le rotor 57 est agencé pour tourner autour d'un troisième axe de rotation 32. Le couple du rotor 57 est transmis par l'axe du rotor 53 à un pignon 12.

Une fonction de la première roue libre 16 est de permettre une transmission de puissance purement mécanique depuis l'axe de pédalier 2 vers la chaine de transmission 23, même si les moteurs 40, 50 ne sont pas alimentés. En position bloquée, la roue libre 16 rend l'axe de pédalier 2 solidaire du plateau de sortie secondaire 4. En position libre, le plateau de sortie 4 est libre de tourner plus vite que l'axe de pédalier 2 lorsque l'axe de pédalier 2 est actionné dans le sens normal de pédalage.

Le groupe motopropulseur 1 comprend préférentiellement un élément de mesure de courant du premier moteur 40 et un élément de mesure de courant du deuxième moteur 50.

Le groupe motopropulseur 1 comprend en outre préférentiellement une unité de contrôle, préférentiellement fixée à une carte de circuit imprimé 20. La carte de circuit imprimé 20 est préférentiellement située perpendiculairement aux deuxième 31 et au troisième 32 axes de rotation.

Préférentiellement, un premier aimant de mesure 42 est fixé à une extrémité d'un arbre 43 du premier moteur 40 et un deuxième aimant de mesure 52 est fixé à une extrémité d'un arbre 53 du deuxième moteur 50.

Préférentiellement, un premier capteur 41 est fixé à la carte de circuit imprimé 20, approximativement dans l'axe du deuxième axe de rotation 31. Le premier capteur 41 et le premier aimant de mesure 42 font partie d'un élément de mesure de position angulaire du rotor 47 du premier moteur 40.

Préférentiellement, un deuxième capteur 51 est fixé à la carte de circuit imprimé 20, approximativement dans l'axe du troisième axe de rotation 32. Le deuxième capteur 51 et le deuxième aimant de mesure 52 font partie d'un élément de mesure de position angulaire du rotor 57 du deuxième moteur 50.

L'unité de contrôle contrôle le premier moteur 40 et le deuxième moteur 50 sur base de la position angulaire du premier moteur 40, de la position angulaire du deuxième moteur 50, du courant du premier moteur 40 et du courant du deuxième moteur 50, ces informations lui ayant été fournies par les éléments de mesures.

L'unité de contrôle contrôle le deuxième moteur 50 en courant ou en couple. L'unité de contrôle contrôle le premier moteur 40 en position angulaire ou en vitesse angulaire.

Le groupe motopropulseur 1 comprend un train épicycloïdal qui comprend un premier élément d'entrée, un élément de sortie et le planétaire 5.

Le groupe motopropulseur 1 comprend en outre un élément de transmission déformable 15, par exemple une chaine ou une courroie, permettant de transmettre une rotation entre l'axe de pédalier 2 et le premier élément d'entrée. Cet élément de transmission déformable 15 forme un système de démultiplication de vitesse conservant le sens de rotation.

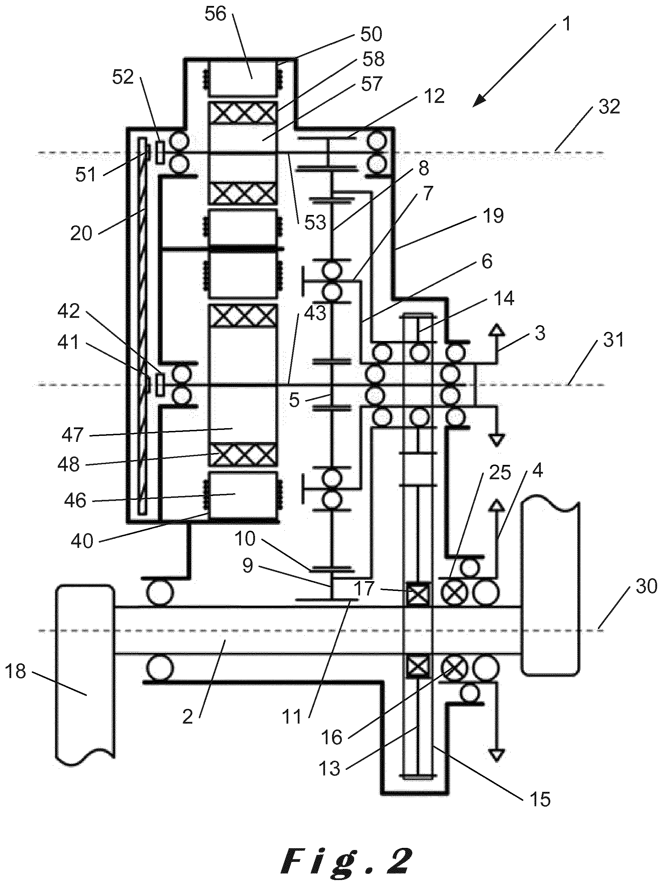

Dans le premier mode de réalisation de l'invention, qui est celui illustré aux figures 1 et 2, le premier élément d'entrée est une couronne 9 et l'élément de sortie est un porte-satellite 6. Préférentiellement, le porte-satellite 6 comprend au moins un satellite 8 agencé pour tourner autour d'un axe de satellite 7. Préférentiellement, la couronne 9 est engrenée sur au moins un satellite 8 via sa denture interne 10. Préférentiellement, le planétaire 5 est engrené sur le au moins un satellite 8.

Dans un mode de réalisation de l'invention, une première roue dentée 13 est solidaire de l'axe de pédalier 2. La première roue dentée 13 est reliée à une deuxième roue dentée 14 par l'élément de transmission déformable 15. La deuxième roue dentée 14 est solidaire de la couronne 9. Préférentiellement, la première roue dentée 13 a un diamètre supérieur à celui de la deuxième roue dentée 14 afin d'augmenter la vitesse de rotation par rapport à celle de l'axe de pédalier 2. Par exemple le diamètre de la première roue dentée 13 peut être entre 1,5 et 3 fois plus grand que celui de la deuxième roue dentée 14.

En mode de fonctionnement normal, le groupe motopropulseur 1 selon le premier mode de réalisation de l'invention fonctionne de la façon suivante. L'axe de pédalier 2 et le deuxième moteur 50 entrainent la couronne 9, l'entrainement entre l'axe de pédalier 2 et la couronne 9 passant par l'élément de transmission déformable 15. La couronne 9 est une première entrée du train épicycloïdal. Le premier moteur 40 entraine le planétaire 5, qui est une deuxième entrée du train épicycloïdal. La couronne 9 et le planétaire 5 entrainent le porte-satellite 6, qui est une sortie du train épicycloïdal. Le porte-satellite 6 entraine le plateau de sortie principal 3. La vitesse de rotation du plateau de sortie principal sera égale à une somme pondérée de la vitesse de rotation de la couronne 9 et de la vitesse de rotation du planétaire 5. En augmentant la vitesse de rotation du planétaire 5, il est donc possible d'augmenter la vitesse du plateau de sortie principal 3, en gardant une vitesse de rotation constante au niveau de l'axe de pédalier 2. Il s'agit donc bien d'une transmission continuellement variable (CVT).

Le pignon 12 est solidaire du rotor 57 du deuxième moteur 50, de façon à tourner avec ce rotor 57. Le pignon 12 est engrené directement sur une denture externe 11 de la couronne 9. Le pignon 12 a un diamètre inférieur à celui de la couronne 9, le but étant de diminuer la vitesse de rotation par rapport à celle du moteur.

Le planétaire 5 est solidaire du rotor 47 du premier moteur 40 de façon à tourner avec ce rotor 47.

Le porte-satellite 6 traverse la paroi latérale du carter 19, de façon à ce que le plateau de sortie principal 3, qui est fixé au porte-satellite 6, soit situé hors du carter 19.

La première roue libre 16 empêche le plateau de sortie secondaire 4 de tourner moins vite que l'axe de pédalier 2 quand l'axe de pédalier 2 tourne dans le sens normal de pédalage. Le but de cette roue libre 16 est que rapport de vitesse du groupe motopropulseur ne puisse être inférieur à 1 :1. Cet emplacement de la première roue libre 16 permet, en cas de couple de pédalage important, d'éviter un grand couple dans le reste de la transmission. Ainsi, certaines parties du groupe motopropulseur ne subissent pas de grand couple. C'est particulièrement intéressant de préserver notamment de cette façon le train épicycloïdal et le système de transmission entre l'axe de pédalier 2 lorsqu'il comprend un élément de transmission déformable 15, comme une courroie.

La figure 2 illustre une variante du groupe motopropulseur 1 dans lequel une deuxième roue libre 17 est installée entre l'axe de pédalier 2 et la première roue dentée 13. Cette roue libre 17 a pour fonction d'empêcher le deuxième moteur 50 d'entrainer l'axe de pédalier 2 lorsque l'axe de pédalier 2 est actionné dans le sens normal de pédalage.

La deuxième roue libre 17 entraine la première roue dentée 13 lorsque l'axe de pédalier 2 est actionné dans le sens normal de pédalage, mais la première roue dentée 13 ne peut pas entrainer l'axe de pédalier 2 lorsque l'axe de pédalier 2 est actionné dans le sens normal de pédalage.

L'ajout de la deuxième roue libre 17 permet une plus grande flexibilité de contrôle car, grâce à elle, le deuxième moteur 50 peut tourner sans actionner l'axe de pédalier 2. Cela permet, par exemple, d'utiliser la motorisation à l'aide d'un accélérateur, sans que le cycliste n'actionne le pédalier.

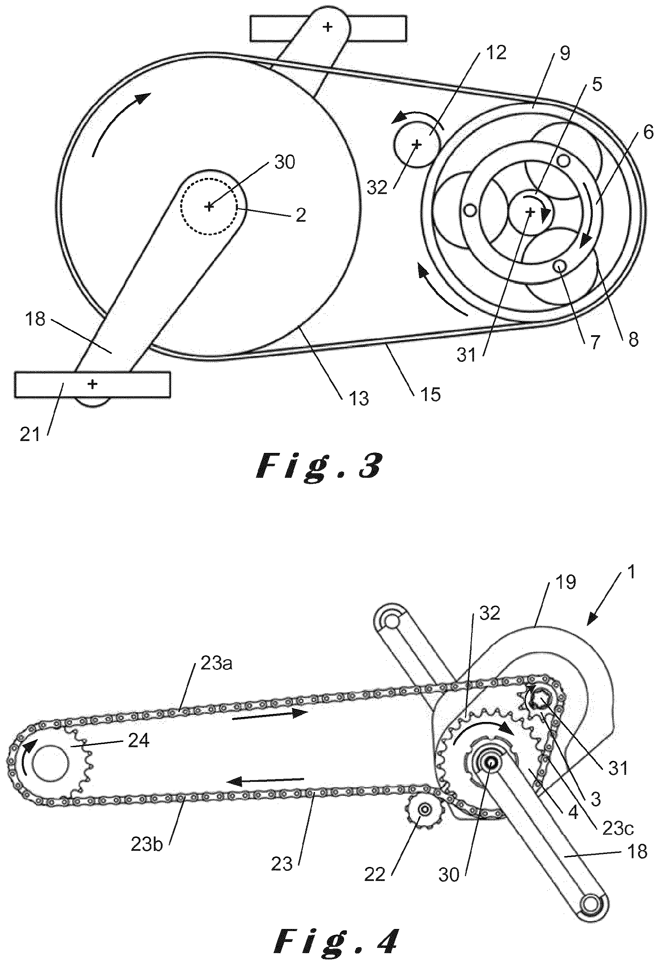

La figure 3 illustre très schématiquement une chaine cinématique interne d'un groupe motopropulseur 1 selon un mode de réalisation de l'invention. Selon cette chaine cinématique, le cycliste fournit une puissance en entrée du système via des pédales 21, entrainant l'axe de pédalier 2 via les manivelles 18. La première roue dentée 13, solidaire de l'axe de pédalier 2 entraine, via l'élément de transmission déformable 15, la couronne 9, de manière à ce que cette dernière tourne plus vite que l'axe de pédalier 2. Le pignon 12, solidaire du rotor 57 du deuxième moteur (non représenté sur ce schéma simplifié), est connecté avec un rapport fixe à la couronne 9. La couronne 9 constitue la première entrée du train épicycloïdal. Le planétaire 5, solidaire du rotor 47 du premier moteur (non représenté sur ce schéma simplifié), constitue la deuxième entrée du train épicycloïdal. Le planétaire 5 et la couronne 9 sont connectés ensemble par le biais du porte-satellite 6 comprenant au moins un satellite 8. Le ou les satellites 8 sont maintenus, libres en rotation, par des axes 7 du porte-satellite 6. Le porte-satellite 6 constitue la sortie du train épicycloïdal.

Les flèches de la figure 3 montrent le sens de rotation des différents organes en fonctionnement normal du groupe motopropulseur 1. Par soucis de simplification et de visibilité du schéma représenté à la figure 3, les différents organes de transmission (roue, pignon, courroie) apparaissent lisses et peuvent faire penser à une transmission par frottement. Cela n'écarte évidemment pas l'utilisation de dentures pour en faire des roues dentées ou des courroies crantées.

La figure 4 illustre une vue latérale d'un véhicule à pédale selon un mode de réalisation de l'invention : un groupe motopropulseur 1, une chaine de transmission de sortie 23, un pignon 24 de roue arrière et un galet tendeur 22. La chaine de transmission de sortie 23 comprend un brin supérieur 23a, un brin inférieur 23b et un brin intermédiaire 23c. Le brin intermédiaire 23c est la partie de la chaine de transmission de sortie 23 se trouvant entre le plateau de sortie principal 3 et le plateau de sortie secondaire 4.

Le rôle du galet tendeur 22 est de reprendre le mou de la chaine ou courroie de transmission de sortie 23 quand la transmission est mise sous charge. Il permet que le brin intermédiaire 23c reste tendu. Ce galet tendeur 22 peut être intégré au groupe motopropulseur 1 ou être fixé sur le cadre du véhicule à pédales. Il est placé de façon à être en contact avec le brin inférieur 23b. Il est également possible d'envisager un fonctionnement fixe sans galet tendeur 22.

Dans le mode de fonctionnement normal du groupe motopropulseur 1, le plateau de sortie principal 3 entraine la chaine ou courroie de transmission de sortie 23. Le plateau de sortie secondaire 4, étant préférentiellement engrené sur la même chaine de transmission 23 que le plateau de sortie principal 3, tourne à vide à une vitesse plus élevée que l'axe de pédalier 2. Le plateau de sortie secondaire 4 est désolidarisé de l'axe de pédalier 2 par l'intermédiaire de la première roue libre 16. Un premier rôle du plateau de sortie secondaire 4 est de guider la chaine de transmission 23 autour de l'axe du pédalier 2, augmentant ainsi l'écart entre le brin de chaine supérieur 23a et le brin de chaine inférieur 23b. De cette manière, il y a suffisamment de place pour le passage de la base arrière droite du cadre dans le cas où le système de propulsion est installé sur un cadre de vélo. Cette base arrière droite est un tube du cadre reliant le point de fixation de la roue arrière à une patte de fixation du groupe motopropulseur. Elle n'est pas représentée à la figure 4.

Dans certains modes de fonctionnement particuliers, différents du mode de fonction normal du groupe motopropulseur 1, la première roue libre 16 se bloque et empêche le plateau de sortie secondaire 4 de tourner moins vite que l'axe du pédalier 2. Dans ce cas, le plateau de sortie secondaire 4 entraine, en tout ou en partie, la chaine de transmission de sortie 23, et donc également le plateau de sortie principal 3. Si le système électrique est mis hors-tension et/ou si l'assistance est désactivée et que le plus petit rapport de vitesse du groupe motopropulseur 1 est sélectionné (soit par l'utilisateur soit par le système de contrôle), toute la puissance du cycliste est alors transmise à la chaine de transmission 23 via le plateau de sortie secondaire 4. Le reste de la transmission n'est donc pas chargé et la transmission est à haut rendement mécanique.

Le plateau de sortie secondaire 4 peut également transmettre une partie de la puissance en mode de fonctionnement normal du groupe motopropulseur 1, si le couple instantané du cycliste dépasse un certain seuil et que le premier moteur 40 sature à son couple maximal. Pendant la durée de cette poussée sur la pédale 21, la valeur instantanée du rapport de vitesse du groupe motopropulseur va diminuer, et si le rapport de vitesse programmé est faible, il se peut que la première roue libre 16 se mette en action et entraine le plateau de sortie secondaire 4 qui transmettra le couple excédentaire du cycliste à la chaine de transmission 23. L'interaction du plateau de sortie secondaire 4 et de la première roue libre 16 empêche le rapport de vitesse du groupe motopropulseur d'atteindre une valeur inférieure à 1.

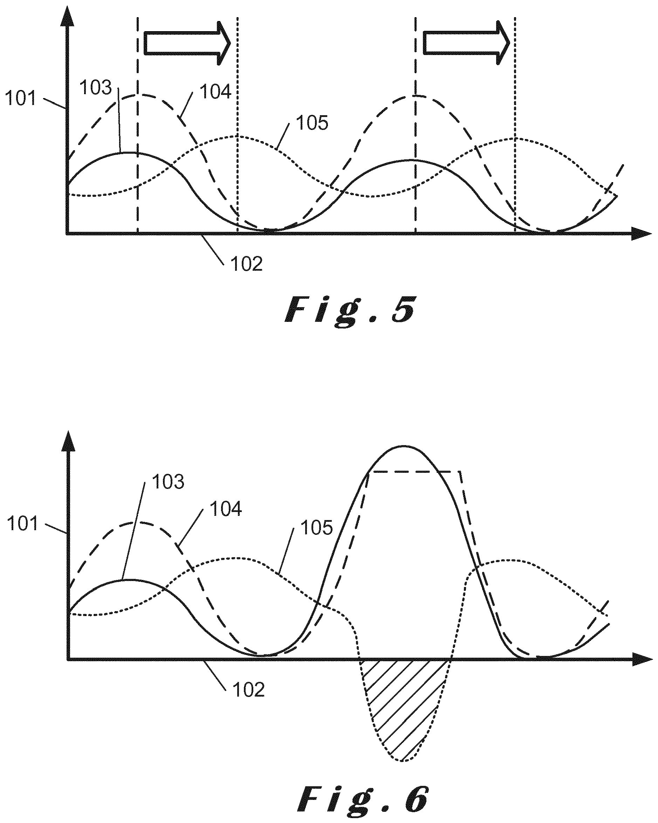

La figure 5 schématise une première méthode de lissage de l'assistance selon l'invention. Cette première méthode comprend de lisser le couple fourni par l'ensemble des deux moteurs électrique en décalant dans le temps la poussée donnée par le deuxième moteur. Le graphique de la figure 5 illustre, sur un graphe couple 101 versus angle de pédalier 102, le couple de l'utilisateur 103, le couple du premier moteur 104 et le couple du deuxième moteur 15. L'utilisateur transmet la force qu'il impose à l'axe de pédalier 2 via les manivelles 18, ce qui induit un couple alternatif dans l'axe du pédalier 2. Le couple fourni par l'utilisateur est maximal quand une des deux manivelles est proche de l'horizontale. Le premier moteur 40 est de préférence régulé pour fonctionner à une certaine vitesse de rotation qui est proportionnelle à la vitesse angle de pédalier du pédalier 40. Quand l'utilisateur exerce une poussée sur une des deux manivelles 18, le pédalier accélère infligeant un retard de position angulaire du premier moteur 40. Ce dernier corrige ce retard en augmentant son couple. Le couple fourni par le cycliste et celui fourni par le premier moteur 40 sont donc relativement en phase.

L'invention propose de déphaser le couple imposé au deuxième moteur 50 afin de combler les creux de couples du premier moteur 40 et ainsi lisser le couple total fourni à la roue arrière. Cela stabilise la régulation, améliore le rendement, diminue les contraintes dans la transmission et permet de diminuer la taille du premier moteur 40. Pour réaliser cette méthode de lissage, il est par exemple possible de décaler ou de filtrer le signal du courant mesuré sur le premier moteur 40 en fonction de la position angulaire du pédalier, avec pour conséquence de décaler le couple imposé au deuxième moteur 50.

La figure 6 schématise une méthode d'anti-glissement de la transmission qui peut s'appliquer au groupe motopropulseur selon l'invention. Le graphique de la figure 6 illustre, sur un graphe couple 101 versus angle de pédalier 102, le couple de l'utilisateur 103, le couple du premier moteur 104 et le couple du deuxième moteur 15. L'humain est capable de fournir des hautes valeurs de couple dans le pédalier pendant de cours instants et lorsque sa vitesse de pédalage est faible. Vu que le couple appliqué sur le pédalier se transmet directement en opposition avec le premier moteur 40 (via la loi de couple du train épicycloïdal), cela implique que le premier moteur 40 doit fournir rapidement beaucoup de couple et donc consommer beaucoup de courant pour suivre sa consigne en position. Afin de limiter la consommation d'énergie et de protéger les enroulements du premier moteur 40 ainsi que les engrenages, l'invention propose de limiter le couple maximal délivré par ledit premier moteur 40. L'inconvénient de cette limitation est que le premier moteur 40 ne pourra plus convenablement suivre sa consigne d'asservissement en position lorsqu'il sera saturé à son couple maximal (limitation de courant), ce qui produira une sensation de glissement durant laquelle le cycliste va sentir son rapport de vitesse chuter pendant le court moment de la poussée de pédale excédante. Ainsi, le groupe motopropulseur est agencé de sorte que la consigne de courant ou de couple du deuxième moteur 50 soit appliquée avec un délai afin que les pics d'assistance du deuxième moteur 50 soient en phase avec les creux de couple du premier moteur 40.

La méthode anti-glissement proposée par la présente invention comprend d'utiliser le deuxième moteur 50 en générateur pour freiner le mouvement du cycliste lorsque celui-ci inflige des poussées trop importantes sur les pédales. Le niveau réel d'assistance électrique diminuera pendant cette poussée trop importante mais le premier moteur 40 sera capable de suivre sa consigne de position angulaire et donc de suivre le rapport de vitesse de consigne. La figure 6 illustre une situation où le couple fourni par l'utilisateur augmente rapidement et monte à une valeur élevée. La méthode selon l'invention diminue le courant de consigne (et donc le couple) du deuxième moteur 50 et impose même un courant négatif (couple négatif) pendant un instant, pour permettre au premier moteur 40 de suivre sa consigne de position angulaire au mieux et sans fournir un couple excessif. Durant la période de temps où le deuxième moteur 50 freine le pédalier, le courant fourni par le deuxième moteur 50 peut alimenter la batterie ou être fourni au premier moteur 40. Cette zone de régénération est hachurée sur la figure 6. Ainsi, le groupe motopropulseur est agencé de sorte que la consigne de courant ou de couple du deuxième moteur 50 est baissée jusqu'à des valeurs de courant ou couple négatives lorsque le premier moteur 40 n'arrive plus à suivre sa consigne de position angulaire.

Il est intéressant de noter que l'agencement du groupe motopropulseur selon l'invention est compatible avec les variantes de groupes motopropulseur décrites dans le document WO2013/160477 ou dans le document WO2016/034574 ou avec d'autres variantes de groupes motopropulseurs connus.

En d'autres termes, l'invention se rapporte à un groupe motopropulseur 1 pour véhicule à pédales. Le groupe motopropulseur 1 comprend un plateau de sortie principal 3 et un plateau de sortie secondaire 4 couplé à l'axe de pédalier 2 par une première roue libre 16. Le couplage entre l'axe de pédalier 2 et le plateau de sortie principal 3 passe par un élément de transmission déformable 15 et un train épicycloïdal.

La présente invention a été décrite en relation avec des modes de réalisations spécifiques, qui ont une valeur purement illustrative et ne doivent pas être considérés comme limitatifs. L'invention est définie par les revendications qui suivent. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Groupe motopropulseur (1) pour un véhicule à pédales comprenant:

   • un axe de pédalier (2) agencé de façon à tourner autour d'un premier axe de rotation (30),
   • un plateau de sortie principal (3) agencé pour entrainer une chaine ou courroie de transmission de sortie (23),
   • un premier moteur (40),
   • un deuxième moteur (50),
   • un train épicycloïdal comprenant un premier élément d'entrée, un élément de sortie et un planétaire (5),

   l'axe de pédalier (2) et le deuxième moteur (50) étant reliés au train épicycloïdal via le premier élément d'entrée de façon à former une première entrée du train épicycloïdal, le premier moteur (40) étant relié au train épicycloïdal via le planétaire (5) de façon à former une deuxième entrée du train épicycloïdal,
   l'élément de sortie reliant le train épicycloïdal au plateau de sortie principal (3) de façon à former une sortie du train épicycloïdal,

   dans lequel le plateau de sortie principal (3), le premier élément d'entrée, l'élément de sortie et le planétaire (5) sont agencés de façon à tourner autour d'un même deuxième axe de rotation (31) différent du premier axe de rotation (30),

   dans lequel le plateau de sortie principal (3) est solidaire de l'élément de sortie,

   **caractérisé en ce que** le groupe motopropulseur (1) comprend :

   • un plateau de sortie secondaire (4) agencé pour tourner autour du premier axe de rotation (30) et engrené sur la chaine ou courroie de transmission de sortie (23),
   • une première roue libre (16) agencée pour empêcher le plateau de sortie secondaire (4) de tourner moins vite que l'axe de pédalier (2) lorsque l'axe de pédalier (2) tourne dans le sens normal de pédalage,
   • un système de démultiplication de vitesse conservant le sens de rotation pour transmettre une rotation entre l'axe de pédalier (2) et le premier élément d'entrée.

2. Groupe motopropulseur (1) selon la revendication 1, dans lequel le train épicycloïdal comprend une couronne (9) et un porte-satellite (6) ; et dans lequel le premier élément d'entrée est la couronne (9) et l'élément de sortie est le porte-satellite (6), ou le premier élément d'entrée est le porte-satellite (6) et l'élément de sortie est la couronne (9).

3. Groupe motopropulseur (1) selon l'une quelconque des revendications précédentes, dans lequel le système de démultiplication de vitesse conservant le sens de rotation comprend un élément de transmission déformable (15), par exemple une chaine ou une courroie.

4. Groupe motopropulseur (1) selon l'une quelconque des revendications précédentes, dans lequel le deuxième moteur (50) est relié au premier élément d'entrée du train épicycloïdal par un mécanisme de réduction à un seul étage.

5. Groupe motopropulseur (1) selon l'une quelconque des revendications précédentes, dans lequel le premier moteur (40) et le deuxième moteur (50) sont situés d'un même côté du train épicycloïdal.

6. Groupe motopropulseur (1) selon l'une quelconque des revendications précédentes, comprenant en outre :

• un élément de mesure de position angulaire du premier moteur (40),
• un élément de mesure de position angulaire du deuxième moteur (50),
• un élément de mesure de courant du premier moteur (40),
• un élément de mesure de courant du deuxième moteur (50),
• une unité de contrôle connectée au premier moteur (40), au deuxième moteur (50), et agencée pour contrôler le premier moteur (40) et le deuxième moteur (50) sur base de la position angulaire du premier moteur (40), de la position angulaire du deuxième moteur (50), du courant du premier moteur (40) et du courant du deuxième moteur (50), l'unité de contrôle étant agencée pour contrôler le deuxième moteur (50) selon un contrôle en courant ou en couple et pour contrôler le premier moteur (40) selon un contrôle en position angulaire ou en vitesse angulaire.

7. Groupe motopropulseur (1) selon la revendication précédente, dans lequel l'unité de contrôle est agencée pour se baser en outre sur un paramètre de rapport de vitesse pour contrôler le premier moteur.

8. Groupe motopropulseur (1) selon la revendication précédente, dans lequel l'unité de contrôle est agencée pour déterminer une consigne de vitesse de rotation et pour imposer ladite consigne de vitesse de rotation au premier moteur (40), la consigne de vitesse de rotation étant déterminée comme directement proportionnelle à une vitesse de rotation du deuxième moteur (50) obtenue par l'élément de mesure de position angulaire du deuxième moteur (50) et au paramètre de rapport de vitesse.

9. Groupe motopropulseur (1) selon l'une quelconque des revendications 7 à 8, dans lequel dans lequel l'unité de contrôle se base en outre sur un paramètre de rapport de vitesse et un paramètre de niveau d'assistance du groupe motopropulseur pour contrôler le deuxième moteur (50).

10. Groupe motopropulseur (1) selon la revendication précédente, dans lequel l'unité de contrôle est agencée pour déterminer une consigne de courant ou de couple et pour imposer ladite consigne de courant ou de couple au deuxième moteur (50), la consigne de courant ou de couple étant déterminée comme directement proportionnelle à un couple ou courant du premier moteur (40) obtenu par l'élément de mesure du courant du premier moteur (40) et étant fonction du paramètre de rapport de vitesse du groupe motopropulseur et du paramètre de niveau d'assistance du groupe motopropulseur.

11. Groupe motopropulseur (1) selon l'une quelconque des revendications précédentes, dans lequel l'axe de pédalier (2) et le premier élément d'entrée sont reliés de façon à ce que le premier élément d'entrée tourne plus vite que l'axe de pédalier (2).

12. Groupe motopropulseur (1) selon l'une quelconque des revendications précédentes, dans lequel le plateau de sortie principal (3) a un diamètre plus petit que le plateau de sortie secondaire (4).

13. Groupe motopropulseur (1) selon l'une quelconque des revendications précédentes, dans lequel le deuxième moteur (50) est relié au premier élément d'entrée de façon à ce que le premier élément d'entrée tourne plus lentement que le rotor du deuxième moteur (50).

14. Groupe motopropulseur (1) selon l'une quelconque des revendications précédentes, comprenant en outre une deuxième roue libre (17) agencée pour empêcher un entrainement de l'axe de pédalier (2) par le deuxième moteur (50) dans un direction de rotation correspondant à un mouvement vers l'avant du véhicule à pédales.

15. Véhicule à pédale comprenant un groupe motopropulseur (1) selon l'une quelconque des revendications précédentes, une roue, et une chaine ou courroie de transmission de sortie engrenée sur le plateau de sortie principal (3), le plateau de sortie secondaire (4) et un pignon de la roue.

**Patentansprüche**

1. Antriebsstrang (1) für ein Tretfahrzeug, umfassend:

• eine Tretlagerwelle (2), die so angeordnet ist, dass sie sich um eine erste Drehachse (30) dreht,
• eine primäre Abtriebsscheibe (3), die so angeordnet ist, dass sie eine Abtriebskette oder einen Abtriebsriemen (23) antreibt,
• einen ersten Motor (40),
• einen zweiten Motor (50),
• ein Planetengetriebe, umfassend ein erstes Antriebselement, ein Abtriebselement und ein Sonnenrad (5),

wobei die Tretlagerwelle (2) und der zweite Motor (50) mit dem Planetengetriebe über das erste Antriebselement verbunden sind, um einen ersten Eingang des Planetengetriebes zu bilden,
wobei der erste Motor (40) über das Sonnenrad (5) mit dem Planetengetriebe verbunden ist, um einen zweiten Eingang des Planetengetriebes zu bilden,
wobei das Abtriebselement das Planetengetriebe mit der primären Abtriebsscheibe (3) verbindet, um einen Ausgang des Planetengetriebes zu bilden,
wobei die primäre Abtriebsscheibe (3), das erste Antriebselement, das Abtriebselement und das Sonnenrad (5) derart angeordnet sind, dass sie sich um dieselbe zweite Drehachse (31) drehen, die sich von der ersten Drehachse (30) unterscheidet,
wobei die primäre Abtriebsscheibe (3) fest mit dem Abtriebselement verbunden ist, **dadurch gekennzeichnet, dass** der Antriebsstrang (1) umfasst:

- eine sekundäre Abtriebsscheibe (4), die so angeordnet ist, dass sie sich um die erste Drehachse (30) dreht und mit der Abtriebskette oder dem Abtriebsriemen (23) im Eingriff ist,
- einen ersten Freilauf (16), der so angeordnet ist, dass er verhindert, dass sich die sekundäre Abtriebsscheibe (4) weniger schnell dreht als die Tretlagerwelle (2), wenn sich die Tretlagerwelle (2) in die normale Tretrichtung dreht,
- ein Untersetzungsgetriebe, das die Drehrichtung beibehält, um eine Drehung zwischen der Tretlagerwelle (2) und dem ersten Antriebselement zu übertragen.

2. Antriebsstrang (1) nach Anspruch 1, wobei das Planetengetriebe ein Hohlrad (9) und einen Planetenträger (6) umfasst; und wobei das erste Antriebselement das Hohlrad (9) ist und das Abtriebselement der Planetenträger (6) ist oder das erste Antriebselement der Planetenträger (6) ist und das Abtriebselement das Hohlrad (9) ist.

3. Antriebsstrang (1) nach einem der vorstehenden Ansprüche, wobei das die Drehrichtung beibehaltende Untersetzungsgetriebe ein verformbares Übertragungselement (15), beispielsweise eine Kette oder einen Riemen, umfasst.

4. Antriebsstrang (1) nach einem der vorstehenden Ansprüche, wobei der zweite Motor (50) mit dem ersten Antriebselement des Planetengetriebes durch einen einstufigen Untersetzungsmechanismus verbunden ist.

5. Antriebsstrang (1) nach einem der vorstehenden Ansprüche, wobei sich der erste Motor (40) und der zweite Motor (50) auf derselben Seite des Planetengetriebes befinden.

6. Antriebsstrang (1) nach einem der vorstehenden Ansprüche, der weiter umfasst:

- ein Element zur Messung der Winkelposition des ersten Motors (40),
- ein Element zur Messung der Winkelposition des zweiten Motors (50),
- ein Element zur Messung des Stroms des ersten Motors (40),
- ein Element zur Messung des Stroms des zweiten Motors (50),
- eine Steuereinheit, die mit dem ersten Motor (40) und mit dem zweiten Motor (50) verbunden und dafür ausgelegt ist, den ersten Motor (40) und den zweiten Motor (50) auf der Grundlage der Winkelposition des ersten Motors (40), der Winkelposition des zweiten Motors (50), des Stroms des ersten Motors (40) und des Stroms des zweiten Motors (50) zu steuern, wobei die Steuereinheit dafür ausgelegt ist, den zweiten Motor (50) entsprechend einer Steuerung des Stroms oder des Drehmoments zu steuern und den ersten Motor (40) entsprechend einer Steuerung der Winkelposition oder der Winkelgeschwindigkeit zu steuern.

7. Antriebsstrang (1) nach dem vorstehenden Anspruch, wobei die Steuereinheit dafür ausgelegt ist, sich weiter auf einen Drehzahlverhältnisparameter zum Steuern des ersten Motors zu stützen.

8. Antriebsstrang (1) nach dem vorstehenden Anspruch, wobei die Steuereinheit dafür ausgelegt ist, einen Drehzahlsollwert zu bestimmen und den Drehzahlsollwert auf den ersten Motor (40) anzuwenden, wobei der Drehzahlsollwert als direkt proportional zu einer Drehzahl des zweiten Motors (50), erhalten durch das Element zur Messung der Winkelposition des zweiten Motors (50), und zu dem Drehzahlverhältnisparameter bestimmt wird.

9. Antriebsstrang (1) nach einem der Ansprüche 7 bis 8, wobei sich die Steuereinheit weiter auf einen Drehzahlverhältnisparameter und einen Parameter für den Unterstützungsgrad des Antriebsstrangs stützt, um den zweiten Motor (50) zu steuern.

10. Antriebsstrang (1) nach dem vorstehenden Anspruch, wobei die Steuereinheit dafür ausgelegt ist, einen Strom- oder Drehmoment-Sollwert zu bestimmen und den Strom- oder Drehmoment-Sollwert auf den zweiten Motor (50) anzuwenden, wobei der Strom- oder Drehmoment-Sollwert als direkt proportional zu einem Drehmoment oder einem Strom des ersten Motors (40), erhalten durch das Element zur Messung des Stroms des ersten Motors (40), bestimmt wird und eine Funktion des Drehzahlverhältnisparameters des Antriebsstrangs und des Parameters für den Unterstützungsgrad des Antriebsstrangs ist.

**11.** Antriebsstrang (1) nach einem der vorstehenden Ansprüche, wobei die Tretlagerwelle (2) und das erste Antriebselement so miteinander verbunden sind, dass sich das erste Antriebselement schneller dreht als die Tretlagerwelle (2).

**12.** Antriebsstrang (1) nach einem der vorstehenden Ansprüche, wobei die primäre Abtriebsscheibe (3) einen kleineren Durchmesser aufweist als die sekundäre Abtriebsscheibe (4).

**13.** Antriebsstrang (1) nach einem der vorstehenden Ansprüche, wobei der zweite Motor (50) so mit dem ersten Antriebselement verbunden ist, dass sich das erste Antriebselement langsamer dreht als der Läufer des zweiten Motors (50).

**14.** Antriebsstrang (1) nach einem der vorstehenden Ansprüche, der weiter einen zweiten Freilauf (17) umfasst, der so angeordnet ist, dass er einen Antrieb der Tretlagerwelle (2) durch den zweiten Motor (50) in einer Drehrichtung verhindert, die einer Vorwärtsbewegung des Tretfahrzeugs entspricht.

**15.** Tretfahrzeug, umfassend einen Antriebsstrang (1) nach einem der vorstehenden Ansprüche, ein Rad und eine Abtriebskette oder einen Abtriebsriemen, der mit der primären Abtriebsscheibe (3), der sekundären Abtriebsscheibe (4) und einem Ritzel des Rades im Eingriff ist.

**Claims**

**1.** Power train (1) for a pedal vehicle comprising:

- a crankset shaft (2) arranged in such a way as to rotate about a first axis of rotation (30),
- a main output plate (3) arranged to drive an output transmission chain or belt (23),
- a first motor (40),
- a second motor (50),
- an epicyclic gear train comprising a first input element, an output element and a sun gear (5),

the crankset shaft (2) and the second motor (50) being connected to the epicyclic gear train via the first input element in such a way as to form a first input of the epicyclic gear train,
the first motor (40) being connected to the epicyclic gear train via the sun gear (5) in such a way as to form a second input of the epicyclic gear train,
the output element connecting the epicyclic gear train to the main output plate (3) in such a way as to form an output of the epicyclic gear train,
wherein the main output plate (3), the first input element, the output element and the sun gear (5) are arranged in such a way as to rotate about the same second axis of rotation (31) different from the first axis of rotation (30),
wherein the main output plate (3) is integral with the output element,
**characterised in that** the power train (1) comprises:

- a secondary output plate (4) arranged to rotate about the first axis of rotation (30) and meshed on the output transmission chain or belt (23),
- a first freewheel (16) arranged to prevent the secondary output plate (4) from rotating slower than the crankset shaft (2) when the crankset shaft (2) rotates in the normal direction of pedalling,
- a speed reduction gear system retaining the direction of rotation to transmit a rotation between the crankset shaft (2) and the first input element.

**2.** Power train (1) according to claim 1, wherein the epicyclic gear train comprises a gear rim (9) and a planet carrier (6); and wherein the first input element is the gear rim (9) and the output element is the planet carrier (6), or the first input element is the planet carrier (6) and the output element is the gear rim (9).

**3.** Power train (1) according to any preceding claim, wherein the speed reduction gear system retaining the direction of rotation comprises a deformable transmission element (15), for example a chain or a belt.

**4.** Power train (1) according to any preceding claim, wherein the second motor (50) is connected to the first input element of the epicyclic gear train by a single-stage reduction mechanism.

**5.** Power train (1) according to any preceding claim, wherein the first motor (40) and the second motor (50) are located on the same side of the epicyclic gear train.

**6.** Power train (1) according to any preceding claim, further comprising:

- an element for measuring the angular position of the first motor (40),
- an element for measuring the angular position of the second motor (50),
- an element for measuring the current of the first motor (40),
- an element for measuring the current of the second motor (50),
- a control unit connected to the first motor (40), to the second motor (50), and arranged to control the first motor (40) and the second motor (50) based on the angular position of the first motor (40), the angular position of the second motor (50), the current of the first motor (40) and the current of the second motor (50), the control unit being arranged to control the second motor (50) according to a control of the current or of the torque and to control the first motor (40) according to a control of the angular position or of the angular speed.

7. Power train (1) according to the preceding claim, wherein the control unit is arranged to be based furthermore on a speed ratio parameter in order to control the first motor.

8. Power train (1) according to the preceding claim, wherein the control unit is arranged to determine a rotation speed setpoint and to impose said rotation speed setpoint on the first motor (40), the rotation speed setpoint being determined as directly proportional to a rotation speed of the second motor (50) obtained by the element for measuring the angular position of the second motor (50) and to the speed ratio parameter.

9. Power train (1) according to any of claims 7 to 8, wherein the control unit is furthermore based on a speed ratio parameter and an assistance level parameter of the power train in order to control the second motor (50).

10. Power train (1) according to the preceding claim, wherein the control unit is arranged to determine a current or torque setpoint and to impose said current or torque setpoint on the second motor (50), the current or torque setpoint being determined as directly proportional to a torque or current of the first motor (40) obtained by the element for measuring the current of the first motor (40) and being a function of the speed ratio parameter of the power train and of the assistance level parameter of the power train.

11. Power train (1) according to any preceding claim, wherein the crankset shaft (2) and the first input element are connected in such a way that the first input element rotates faster than the crankset shaft (2).

12. Power train (1) according to any preceding claim, wherein the main output plate (3) has a smaller diameter than the secondary output plate (4).

13. Power train (1) according to any preceding claim, wherein the second motor (50) is connected to the first input element in such a way that the first input element rotates more slowly than the rotor of the second motor (50).

14. Power train (1) according to any preceding claim, further comprising a second freewheel (17) arranged to prevent a driving of the crankset shaft (2) by the second motor (50) in a direction of rotation corresponding to a forward movement of the pedal vehicle.

15. Pedal vehicle comprising a power train (1) according to any preceding claim, a wheel, and an output transmission chain or belt meshed on the main output plate (3), the secondary output plate (4) and a pinion of the wheel.

# Fig.1

*Fig.2*

**Fig. 3**

**Fig. 4**

**Fig.5**

**Fig.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016034574 A

- WO 2013160477 A